# EUROPEAN PATENT SPECIFICATION

(11) **EP 3 298 670 B1**
(45) Date of publication and mention of the grant of the patent: **10.11.2021**
(21) Application number: 16727557.7
(22) Date of filing: 19.05.2016
(51) Int. Cl.: H02G 15/00, H02G 15/064

(54) **A SYSTEM COMPRISING A CABLE AND A COLD SHRINKABLE CABLE TERMINA, COLD SHRINKABLE TERMINAL ASSEMBLY AND METHOD OF TERMINATING A CABLE**
KALTSCHRUMPFBARE KABELKLEMME, KALTSCHRUMPFBARE KABELENDANORDNUNG UND VERFAHREN ZUM ABSCHLIESSEN EINES KABELS
BORNE DE CÂBLE RÉTRACTABLE À FROID, ENSEMBLE BORNE RÉTRACTABLE À FROID ET PROCÉDÉ PERMETTANT DE TERMINER UN CÂBLE

(30) Priority: 19.05.2015 CN 201510255638
(43) Date of publication of application: 28.03.2018
(73) Proprietor: Tyco Electronics (Shanghai) Co. Ltd., Shanghai 200131 (CN)
(72) Inventor: LI, Yugang, Shanghai (CN); YANG, Lizhang, Shanghai (CN); LI, Peng, Shanghai (CN); XUE, Song, Shanghai (CN)
(74) Representative: Grünecker Patent- und Rechtsanwälte PartG mbB
(86) International application number: PCT/IB2016/052941
(87) International publication number: WO 2016/185418

(56) References cited:
- EP-A1- 0 727 856
- WO-A2-2014/181212
- US-A- 4 589 939
- Nexans: "Catalogue 2012", , 31 January 2012 (2012-01-31), XP055522873, Retrieved from the Internet: URL:https://www.nexans.be/eservice/Belgium -en/fileLibrary/Download_540225270/Belgium /files/JOINTS_1.pdf [retrieved on 2018-11-12]

## Description

### CROSS-REFERENCE TO RELATED APPLICATION

This application claims the benefit of Chinese Patent Application No.CN201510255638.4 filed on May 19, 2015 in the State Intellectual Property Office of China.

### BACKGROUND OF THE INVENTION

### Field of the Invention

The present invention relates to system comprising a cable and a cold shrinkable cable terminal, a cold shrinkable terminal assembly and to a method of terminating a cable.

### Description of the Related Art

A cable accessory comprising a cold shrinkable terminal and an intermediate joint is an important part of a power transmission cable line. The cold shrinkable terminal is generally applied in a joint of a cable to an electric apparatus, such as, generator, motor, transformer, gas insulation switchgear (GIS), or the like, and the intermediate joint is generally applied in a joint of two cables. The cold shrinkable terminal is used to disperse an electric field at an incision of a conductive shielding layer of the cable and protect the cable from being breakdown. Also, it may prevent moisture and conductive contaminants from entering into an insulation tube and contacting a conductor of the cable, retaining the insulation performance of the joint of the cable, and ensuring the long-term safe operation of the cable.

In the prior art, a pre-expanded cold shrinkable terminal for terminating a cable mainly comprises a terminal body, a stress control cone and an end sealing connection member. The end sealing connection member is hermetically connected to one end of the terminal body. The stress control cone is provided in the terminal body near the other end of the terminal body.

The cable generally comprises a conductor core, an inner insulation layer covered on the conductor core, a conductive shielding layer covered on the inner insulation layer, and an outer sheath layer covered on the conductive shielding layer. Thereby, before mounting the cold shrinkable terminal to the cable, it needs to remove a section of outer sheath layer from the cable to expose a section of conductive shielding layer, remove a part of the exposed conductive shielding layer to expose a section of inner insulation layer, and remove a part of the exposed inner insulation layer to expose a section of conductor core. In this way, a processed cable joint is formed. Then, a layer of grease, for example, silicone oil, is coated on the exposed inner insulation layer of the cable joint. Then, the cold shrinkable terminal is mounted on the cable joint coated with the layer of grease. After the cold shrinkable terminal is mounted on the cable joint, the grease is filled in a void between the cable joint and the terminal body of the cold shrinkable terminal. The grease filled in the void may effectively reduce the risk of local concentrated discharge and effectively prevent the phenomenon of breakdown.

In the prior art, there is also disclosed a pre-expanded cold shrinkable terminal for terminating a cable. The cold shrinkable terminal comprises a terminal body, a stress control tube provided in the terminal body, and a layer of stress control clay provided in the terminal body. Before mounting the cold shrinkable terminal to a processed cable joint of the cable, the stress control clay and the stress control tube are covered on the exposed conductive shielding layer and the exposed inner insulation layer of the processed cable joint of the cable. In this way, by means of double layers of stress control material, it may prevent the local concentrated discharge at the processed cable joint of the cable.

Currently, in the prior art, the terminal body of the pre-expanded cold shrinkable terminal is commonly made of silicone rubber material, and a void filling glue containing silicone rubber base material is often used as the stress control clay. As a result, the terminal body and the stress control clay contain the same silicone rubber base material. Since two kinds of materials containing the same base material may affect each other in a case of large expansion ratio, the physical properties of the terminal body may be decreased, and the vulcanized terminal body of silicone rubber may be easily cracked.

A cold shrinkable terminal assembly is known from WO2014/181212 A2. A method of insulating the cores of multiconductor cables, wherein inserts which are made from or provided with mastic, are placed between the cables and melted with heat, is known from US 4 589 939 A. The technical sheet of the single core straight joint 17CSJ-S discloses a cold shrinkable joint in which mastic is placed between the cable and the terminal.

### SUMMARY OF THE INVENTION

The present invention has been made to overcome or alleviate at least one aspect of the above mentioned disadvantages. The invention provides a system comprising a cable and a cold shrinkable cable terminal according to claim 1, a cold shrinkable terminal assembly according to claim 2 and a method of terminating a cable according to claim 9.

According to the present invention, there is provided a system comprising a cable, a cold shrinkable cable terminal adapted to be mounted on a cable to be terminated, a cold shrinkable terminal assembly adapted to terminate a cable, and a method of terminating a cable to improve physical properties of a terminal body.

According to another object of the present invention, there is provided a cold shrinkable terminal assembly to reduce the burden of an operator and simplify the installation of a cold shrinkable terminal.

According to independent claim 1 of the present invention, there is provided a system comprising a cable and a cold shrinkable cable terminal adapted to be mounted on a cable to be terminated. The cable has a cable joint at one end thereof, the cable joint comprises a conductor core, an inner insulation layer covered on the conductor core, and a conductive shielding layer covered on the inner insulation layer. The cold shrinkable cable terminal comprises: a terminal body fixed to the cable joint; and a composite void filling mastic at least covered on an incision of the exposed conductive shielding layer. The composite void filling mastic comprises: a filling layer contacting the cable joint; and a separating layer located between the filling layer and the terminal body and made of material different from the terminal body.

According to the present invention, the separating layer is made of rubber material based hydrocarbon.

According to the present invention, the separating layer is made of at least one of ethylene propylene diene monomer, thermoplastic ethylene propylene rubber, polyisobutylene, and polyisoprene.

According to the present invention, the filling layer is made of material comprising silicone rubber, and the filling layer has a dielectric constant within a range of 10-50.

According to another exemplary embodiment of the present invention, the filling layer has a thickness within a range of 0.01-1mm, and the separating layer has a thickness within a range of 0.01-0.5mm.

According to another exemplary embodiment of the present invention, the cold shrinkable cable terminal further comprises a stress control cone provided in the terminal body, wherein the stress control cone and the terminal body are formed into a single piece.

According to another exemplary embodiment of the present invention, the filling layer is made of material comprising silicone rubber, and the filling layer has a dielectric constant within a range of 3-50, preferably within a range of 3.5-16.

According to independent claim 2 of the present invention, there is provided a cold shrinkable terminal assembly adapted to terminate a cable. The cable has a cable joint at one end thereof, nd the cable joint comprises a conductor core, an inner insulation layer covered on the conductor core, and a conductive shielding layer covered on the inner insulation layer. The cold shrinkable terminal assembly comprises: a cold shrinkable cable terminal comprising a terminal body configured to be fixed to the cable joint; and a support tube on which a composite void filling mastic is preset. The terminal body is pre-expanded on the support tube on which the composite void filling mastic is preset, wherein the composite void filling mastic at least covers an incision of the exposed conductive shielding layer after the cold shrinkable terminal is fixed to the cable joint. The composite void filling mastic comprises: a filling layer contacting an outer wall of the support tube; and a separating layer located between the filling layer and the terminal body and made of material different from the terminal body.

According to the present invention, the separating layer is made of rubber material based hydrocarbon.

According to the present invention, the separating layer is made of at least one of ethylene propylene diene monomer, thermoplastic ethylene propylene rubber, polyisobutylene, and polyisoprene.

According to another exemplary embodiment of the present invention, the filling layer is made of the same material as the terminal body.

According to the present invention, the filling layer is made of material comprising silicone rubber, and the filling layer has a dielectric constant within a range of 10-50.

According to another exemplary embodiment of the present invention, the filling layer has a thickness within a range of 0.01-1mm, and the separating layer has a thickness within a range of 0.01-0.5mm.

According to another exemplary embodiment of the present invention, the cold shrinkable terminal further comprises a stress control cone provided in the terminal body, and the stress control cone and the terminal body are formed into a single piece.

According to another exemplary embodiment of the present invention, the filling layer is made of material comprising silicone rubber, and the filling layer has a dielectric constant within a range of 3-50, preferably within a range of 3.5-16.

According to another exemplary embodiment of the present invention, the support tube comprises a straight tube or an irregular shaped tube.

According to another exemplary embodiment of the present invention, a sealant is provided on an outer surface of the support tube corresponding to an end of the conductor core.

According to independent claim 9 of the present invention, there is provided a method of terminating a cable, comprising steps of:
S100: providing a support tube, and providing a composite void filling mastic on a section of an outer wall of the support tube;
S200: pre-expanding a terminal body of a cold shrinkable terminal on the support tube on which the composite void filling mastic is preset;
S300: inserting a cable joint, from which a section of conductive shielding layer and a section of inner insulation layer are removed, of the cable into the support tube; and
S400: detaching the support tube, so that the terminal body of the cold shrinkable terminal is shrunk on the cable joint of the cable, and the composite void filling mastic at least covers an incision of the exposed conductive shielding layer,
wherein the composite void filling mastic comprises:
a filling layer being in contact with an outer wall of the support tube; and
a separating layer covered on the filling layer and made of material different from the terminal body.

According to the present invention, the separating layer is made of at least one of ethylene propylene diene monomer, thermoplastic ethylene propylene rubber, polyisobutylene, and polyisoprene.

According to another exemplary embodiment of the present invention, the filling layer is made of the same material as the terminal body.

According to another exemplary embodiment of the present invention, the method further comprising a step of S310 between the step S300 and the step S400,
S310: providing a metal connection terminal, wherein one end of the metal connection terminal is inserted into the support tube from one end of the support tube opposite to the cable joint and electrically connected to the exposed conductor core of the cable joint.

According to another exemplary embodiment of the present invention, the metal connection terminal is electrically connected to the conductor core of the cable joint by crimping or bolting.

According to another exemplary embodiment of the present invention, the step S100 further comprising: providing a sealant on an outer wall of the other end of the support tube, wherein the sealant is located between an outer surface of the metal connection terminal and the terminal body at a location where the metal connection terminal is connected to the conductor core after the support tube is detached.

In the cold shrinkable cable terminal mounted on the cable, the cold shrinkable terminal assembly for terminating the cable, and the method of terminating the cable according to above exemplary embodiments of the present invention, since the composite void filling mastic comprises the separating layer made of material different from the terminal body, it avoids the filling layer to directly contact the terminal body made of silicone rubber material, effectively preventing the physical properties of the terminal body from being reduced due to the swelling of the terminal body caused by the filling layer, and eliminating the risk of the cracking of the terminal body.

### BRIEF DESCRIPTION OF THE DRAWINGS

The above and other features of the present invention will become more apparent by describing in detail exemplary embodiments thereof with reference to the accompanying drawings, in which:
Fig.1 is an illustrative plan view of a cable joint of a typical cable;
Fig.1A is an illustrative enlarged local axial cross section view of an end of a exposed conductive shielding layer of the cable joint of Fig.1 according to an exemplary embodiment of the present invention;
Fig.1B is an illustrative enlarged local axial cross section view of an end of a exposed conductive shielding layer of the cable joint of Fig.1 according to another exemplary embodiment of the present invention;
Fig.2 is an illustrative axial cross section view of a cold shrinkable terminal adapted to be mounted on a cable joint according to a first embodiment of the present invention;
Fig.3 is an illustrative axial cross section view of a support tube on which the composite void filling mastic are preset according to an embodiment of the present invention;
Fig.4 is an illustrative enlarged local axial cross section view of an end of the composite void filling mastic of Fig.3;
Fig.5 is an illustrative axial cross section view of a cold shrinkable terminal assembly according to a first embodiment of the present invention, in which the cold shrinkable terminal of Fig.2 is pre-expanded on the support tube provided with the composite void filling mastic of Fig.3;
Fig.6 is an illustrative axial cross section view of the cold shrinkable terminal mounted on the cable joint according to the first embodiment of the present invention;
Fig.7 is an illustrative axial cross section view of a support tube on which a composite void filling mastic is preset according to a second embodiment of the present invention;
Fig.8 is an illustrative axial cross section view of a cold shrinkable terminal assembly according to a second embodiment of the present invention, in which the cold shrinkable terminal is pre-expanded on the support tube provided with the composite void filling mastic of Fig.7; and
Fig.9 is an illustrative axial cross section view of the cold shrinkable terminal mounted on the cable joint according to the second embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a cold shrinkable terminal assembly adapted to terminate a cable, wherein the cable has a cable joint at one end thereof, and the cable joint comprises a conductor core, an inner insulation layer covered on the conductor core, and a conductive shielding layer covered on the inner insulation layer. The cold shrinkable terminal assembly comprises: a cold shrinkable cable terminal comprising a terminal body configured to be fixed to the cable joint; and a support tube, the terminal body being pre-expanded on the support tube on which a composite void filling mastic is preset. The composite void filling mastic at least covers an incision of the exposed conductive shielding layer after the cold shrinkable terminal is fixed to the cable joint. The composite void filling mastic comprises a filling layer in contact with an outer wall of the support tube; and a separating layer located between the filling layer and the terminal body and made of material different from the terminal body.

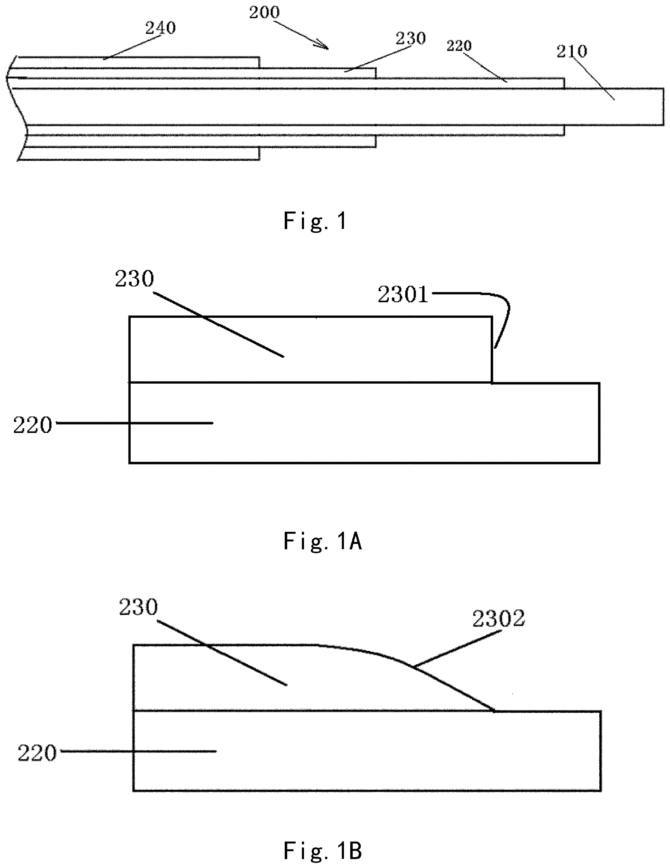

Fig.1 is an illustrative plan view of a cable joint of a typical cable; Fig.1A is an illustrative enlarged local axial cross section view of an end of the exposed conductive shielding layer of the cable joint of Fig.1 according to an exemplary embodiment of the present invention.

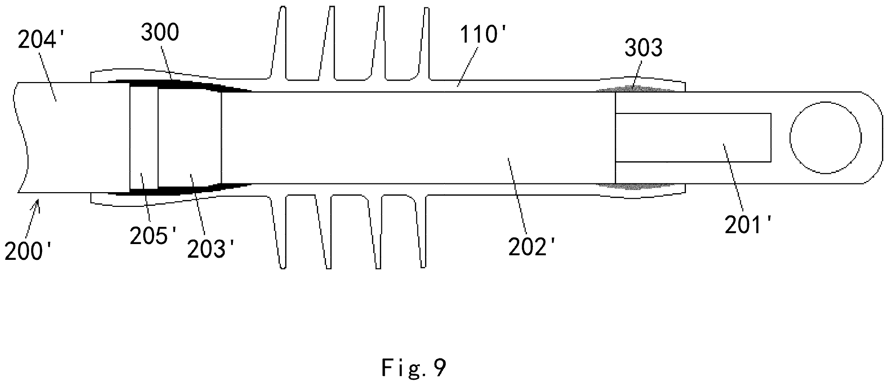

As shown in Fig.1, the cable has a cable joint 200 at one end thereof. The cable joint 200 comprises a conductor core 210, an inner insulation layer 220 covered on the conductor core 210, a conductive shielding layer 230 covered on the inner insulation layer 220, and an outer sheath layer 240 covered on the conductive shielding layer 230. In another embodiment, the cable may further comprise a metal shielding layer (see Fig.9, to be described later) between the conductive shielding layer 230 and the outer sheath layer 240. Thereby, before terminating the cable joint 200, it needs to remove a section of outer sheath layer 240 from an end of the cable to expose a section of conductive shielding layer 230, remove a part of the exposed conductive shielding layer 230 to expose a section of inner insulation layer 220, and remove a part of the exposed inner insulation layer 220 to expose a section of conductor core 210. In this way, a resultant cable joint 200 is formed. As shown in Fig.1A, an incision 2301 is formed at an end (right end in Fig.1A) of the exposed conductive shielding layer 230 by cutting a part of the conductive shielding layer 230. The incision 2301 has a surface substantially perpendicular to the inner insulation layer 220. In an embodiment, the cable may be used to transmit a voltage below 110kV, for example, the cable may be suitable to transmit a voltage of 35kV, 10kV, or other suitable value.

Fig.1B is an illustrative enlarged local axial cross section view of an end of the exposed conductive shielding layer of the cable joint of Fig.1 according to another exemplary embodiment of the present invention. In this embodiment, an incision 2302 is formed at an end (right end in Fig.1B) of the exposed conductive shielding layer 230 by cutting a part of the conductive shielding layer 230. The incision 2302 has a smooth surface inclined with respect to the inner insulation layer 220.

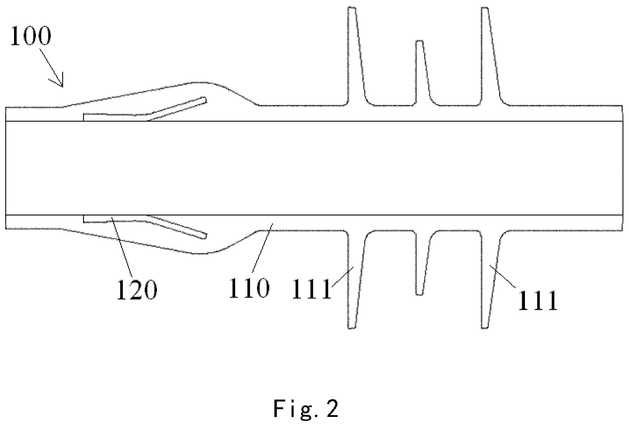

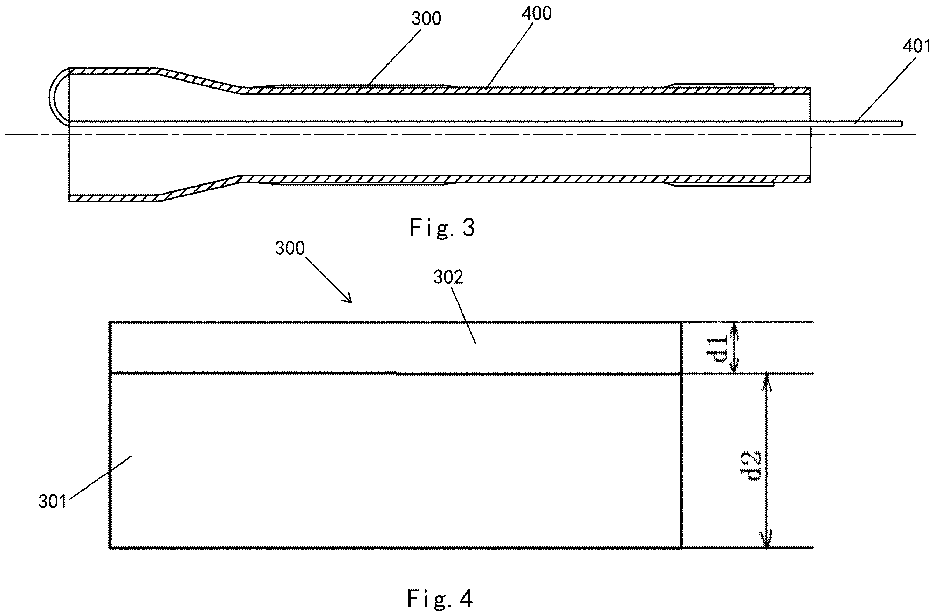

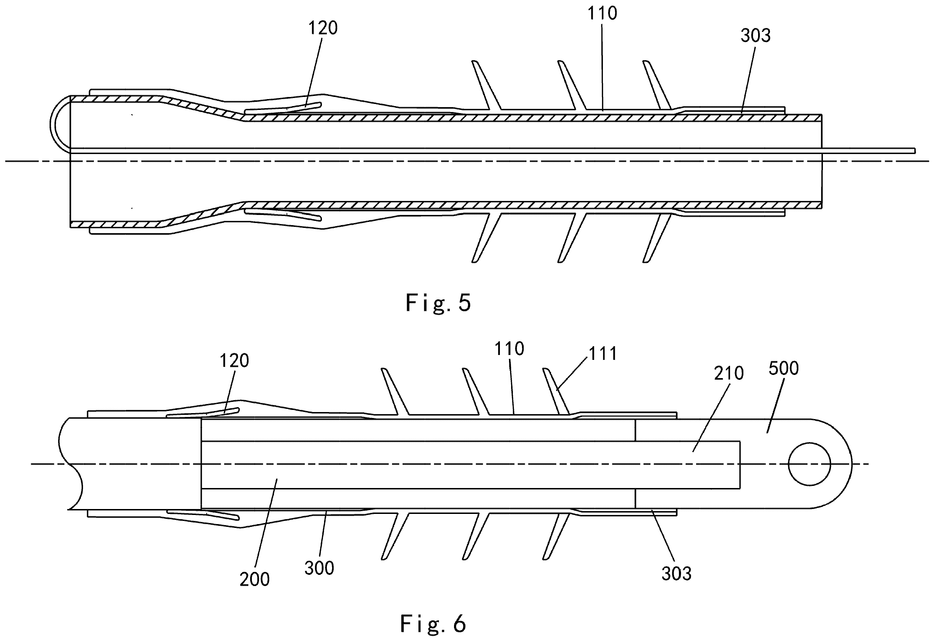

Fig.5 is an illustrative axial cross section view of a cold shrinkable terminal assembly according to a first embodiment of the present invention, in which the cold shrinkable terminal of Fig.2 is pre-expanded on the support tube provided with the composite void filling mastic of Fig.3; Fig.6 is an illustrative axial cross section view of the cold shrinkable terminal mounted on the cable joint 200 according to the first embodiment of the present invention.

As shown in Figs.1, 5 and 6, in an embodiment, the cold shrinkable terminal is adapted to be mounted to the cable to be terminated. The cable comprises a cable joint 200 at an end thereof. The cold shrinkable terminal comprises a cylindrical terminal body 110 fixed to the cable joint 200 and a composite void filling mastic 300. The cable terminal comprises the cable joint 200, and the cold shrinkable terminal mounted on the cable joint 200. As shown in Fig.4, the composite void filling mastic 300 is provided to at least cover on an incision of the exposed conductive shielding layer 230. The composite void filling mastic 300 comprises a filling layer 301 in contact with the cable joint 200, and a separating layer 302 located between the filling layer 301 and the terminal body 110. The separating layer 302 is made of material different from the terminal body 110.

Since the composite void filling mastic 300 comprises the separating layer 302 made of material different from that of the terminal body 110, it avoids the filling layer 301 to directly become in contact with the terminal body 110 made of silicone rubber material, effectively preventing the physical properties of the terminal body 110 from being reduced due to the swelling of the terminal body 110 caused by the filling layer 301, and eliminating the risk of the cracking of the terminal body 110.

The filling layer 301 of the composite void filling mastic 300 is apt to be deformed upon being pressed. Thereby, the filling layer 301 may be filled in a gap at a step formed by the incision of the conductive shielding layer 230 or at any other location between the terminal body and the cable joint and effective eliminate the air from the gap when the terminal body is mounted on the cable joint 200. Also, the filling layer 301 of the composite void filling mastic 300 has a dielectric constant larger than the inner insulation layer 220. Thereby, it may disperse the electric field, decrease the electric field strength at the incision of the conductive shielding layer 230 and the surface of the inner insulation layer 220, prevent the local concentrated discharge at the cable joint of the cable, and improve the safety of the operation of the cable. Also, the separating layer may eliminate the risk of the cracking of the terminal body, and prevent the local concentrated discharge near the incision of the conductive shielding layer.

In an embodiment, the filling layer 301 may be made of the same material as the terminal body 110, for example, the filling layer 301 may be made of silicone rubber material. Since the filling layer 301 and the terminal body 110 made of the same material do not directly contact with each other, it may effectively prevent the physical properties of the terminal body 110 from being reduced due to the swelling of the terminal body 110 caused by the filling layer 301, and eliminate the risk of the cracking of the terminal body 110.

The separating layer 302 may be made of rubber material based hydrocarbon. For example, the separating layer 302 may be made of at least one of ethylene propylene diene monomer (EPDM), thermoplastic ethylene propylene rubber, polyisobutylene, and polyisoprene. The filling layer 301 may be made of material comprising silicone rubber, and the filling layer 301 may have a dielectric constant within a range of 10-50. The filling layer has a thickness d1 within a range of 0.01-1mm, the separating layer has a thickness d2 within a range of 0.01-0.5mm. In this way, as shown in Figs.4 and 6, the filling layer 301 is provided to cover the incision 2301 of the conductive shielding layer 230 and may be filled in a void between the terminal body 110 and the inner insulation layer 220 at the incision 2301 of the conductive shielding layer 230, so as to control the electric field near the incision 2301, effectively reduce the local discharge, and prevent the breakdown phenomenon. In an embodiment, the separating layer 302 has a width larger than a width of the filling layer 301 in an axial direction. Also, the composite void filling mastic further is provided to cover a part of the exposed conductive shielding layer 230 and at least a part of the exposed inner insulation layer 220.

In an embodiment, the plastic value of the filling layer 301 measured at 70°C in accordance with GB/T 12828-2006 standard is less than 600. The GB/T 12828-2006 standard refers to a standard of "Rubber, raw and unvalcanized compounded-Determination of plasticity number and recovery number-Parallel plate method" distributed on Dec. 29, 2006 and implemented on June 1, 2007 by General Administration of Quality Supervision, Inspection and Quarantine of the people's Republic of China and China National Standardization Management Committee.

In an embodiment, as shown in Fig.2, the cold shrinkable terminal 100 may further comprise a stress control cone 120 provided in the terminal body 110. The stress control cone 120 and the terminal body 110 may be formed into a single piece. In this case, the filling layer 301 may be made of material comprising silicone rubber, and the filling layer 301 may have a dielectric constant within a range of 3-50, preferably within a range of 3.5-16. The stress control cone 120 may prevent the phenomenon of electric field concentration and discharge breakdown at the cable joint 100 of the cable. In an embodiment, the stress control cone 120 and the terminal body 110 may be made of electrically insulating silicone rubber material. In this case, the terminal body 110 and the stress control cone 120 may be molded into a single piece by molding. Also, a plurality of umbrella flanges 111 protruding outward may be formed on the terminal body 110, in order to increase the creepage distance of the cold shrinkable terminal 100.

Fig.6 is an illustrative axial cross section view of the cold shrinkable terminal mounted on the cable joint according to the first embodiment of the present invention. As shown in Fig.6, in an embodiment, after the cold shrinkable terminal 100 is mounted on the cable joint 200, a metal connection terminal 500 may be mounted. One end of the metal connection terminal 500 is inserted into a support tube 400 (to be described in detail later) from one end of the support tube 400 opposite to the cable joint 200 and electrically connected to the exposed conductor core 210 of the cable joint 200. In an embodiment, the metal connection terminal 500 may be electrically connected to the conductor core 210 of the cable joint 200 by crimping or bolting. The metal connection terminal 500 is fitted with the terminal body 110 of the cold shrinkable terminal 100 in a sealing manner.

In a further embodiment, a sealant 303 is provided between an outer surface of the metal connection terminal 500 and the terminal body 110 at a location where the metal connection terminal 500 is connected to the conductor core 210. The sealant 303 may effectively prevent rain or moisture from entering into the clod shrinkable terminal 100 through an interface between the terminal body 110 and the metal connection terminal 500.

Fig.5 is an illustrative axial cross section view of a cold shrinkable terminal assembly according to an embodiment of the present invention. As shown in Fig.5, there is provided a cold shrinkable terminal assembly for terminating the cable and manufacturing the cable terminal of Fig.6. As shown in Fig.1, the cable has a cable joint 200 at one end thereof. The cable joint 200 comprises a conductor core 210, an inner insulation layer 220 covered on the conductor core 210, a conductive shielding layer 230 covered on the inner insulation layer 220, and an outer sheath layer 240 covered on the conductive shielding layer 230. In another embodiment, the cable may further comprise a metal shielding layer (see Fig.9, to be described later) between the conductive shielding layer 230 and the outer sheath layer 240.

As shown in Figs.2-5, in an embodiment, the cold shrinkable terminal assembly mainly comprises a cold shrinkable terminal 100 and a support tube 400. The cold shrinkable terminal 100 comprises a terminal body 110 configured to be fixed to the cable joint 200. The terminal body 110 is pre-expanded on the support tube 400 on which the composite void filling mastic 300 is preset. The composite void filling mastic 300 at least covers an incision 2301 of the exposed conductive shielding layer 230 after the cold shrinkable terminal 100 is fixed to the cable joint 200. As shown in Figs.4 and 6, the composite void filling mastic 300 comprises a filling layer 301 being in contact with an outer wall of the support tube 400 and a separating layer 302 located between the filling layer 301 and the terminal body 110. The separating layer 302 is made of material different from the terminal body 110.

Since the composite void filling mastic 300 comprises the separating layer 302 made of material different from the terminal body 110, it avoids the filling layer 301 to directly contact the terminal body 110 made of silicone rubber material, effectively preventing the physical properties of the terminal body 110 from being reduced due to the swelling of the terminal body 110 caused by the filling layer 301, and eliminating the risk of the cracking of the terminal body 110.

The filling layer 301 of the composite void filling mastic 300 is apt to be deformed upon being pressed. Thereby, the filling layer 301 may be filled in a gap at a step formed by the incision of the conductive shielding layer 230 or at any other location between the terminal body and the cable joint and effective eliminate the air from the gap after the terminal body is mounted on the cable joint 200. Also, the filling layer 301 of the composite void filling mastic 300 has a dielectric constant larger than the inner insulation layer 220. Thereby, it may disperse the electric field, decrease the electric field strength at the incision of the conductive shielding layer 230 and the surface of the inner insulation layer 220, prevent the local concentrated discharge at the cable joint of the cable, and improve the safety of the operation of the cable. Also, the separating layer may eliminate the risk of the cracking of the terminal body, and prevent the local concentrated discharge near the incision of the conductive shielding layer.

In an embodiment, the filling layer 301 may be made of the same material as the terminal body 110, for example, the filling layer 301 may be made of silicone rubber material. The separating layer 302 may be made of rubber material based hydrocarbon. For example, the separating layer 302 may be made of at least one of ethylene propylene diene monomer (EPDM), thermoplastic ethylene propylene rubber, polyisobutylene, and polyisoprene. The filling layer 301 may have a dielectric constant less than 16. The filling layer 301 may have a thickness about 0.7mm, the separating layer 302 may have a thickness within a range of 0.01-0.5mm. In an embodiment, the separating layer 302 may have a width larger than a width of the filling layer 301 in an axial direction, so as to completely isolate the terminal body 110 from the filling layer 301 by the separating layer 302.

In an embodiment, the support tube 400 may be an irregular shaped tube, for example, having portions with different diameters. As shown in Fig.3, the support tube comprises a tapered tube portion with a gradient diameter and a cylindrical portion with a constant diameter. The support tube 400 may be formed as a spiral support tube. The spiral support tube is formed by winding a strip made of Polyethylene (PE) or Polypropylene (PP) into a spiral tube. The spiral support tube 400 comprises a rope 401 extending from a first end to a second end of the spiral support tube inside the spiral support tube. The spiral support tube may be unwound and detached by pulling the rope 401 from the second end of the spiral support tube.

The cold shrinkable terminal 100 may be pre-expanded on the support tube 400 provided with the composite void filling mastic 300 in the factory, so that the cold shrinkable terminal assembly is obtained. The position of the cold shrinkable terminal 100 and the position of the composite void filling mastic 300 are relatively fixed after expanding the cold shrinkable terminal 100. Thereby, when it needs to mount the cold shrinkable terminal 100 on the cable joint 200, the cable joint 200 may be directly inserted into the support tube 400 of the cold shrinkable terminal assembly, and then the support tube 400 may be detached by pulling the rope 401 from the second end of the spiral support tube. In this way, it does not need to coat the composite void filling mastic 300 on the cable joint 200 at the installation site, simplifying the installation procedures at the site, increasing the installation efficiency of the cold shrinkable terminal, realizing the quick and easy installation of the cold shrinkable terminal, and improving the electrical performance of the cold shrinkable terminal assembly.

Hereafter, it will describe in detail a method of terminating a cable with reference to Figs.2-6. It is appreciated that the method of terminating the cable is a method of forming a cable terminal by mounting the cold shrinkable terminal 100 on the cable joint 200 of the cable. The method of terminating the cable mainly comprises steps of:
S100: providing a support tube 400, and providing a composite void filling mastic 300 on a section of an outer wall of the support tube 400, as shown in Fig.3;
S200: pre-expanding a terminal body 110 of a cold shrinkable terminal 100 on the support tube 400 on which the composite void filling mastic 300 is preset, as shown in Fig.5;
S300: inserting a cable joint 200, from which a section of conductive shielding layer 230 and a section of inner insulation layer 220 are removed, of the cable into the support tube 400; and
S400: detaching the support tube 400, so that the terminal body 110 of the cold shrinkable terminal 100 is shrunk on the cable joint 200 of the cable, and the composite void filling mastic 300 at least covers an incision 2301 of the exposed conductive shielding layer 230, as shown in Fig.6.

The composite void filling mastic 300 comprises a filling layer 301 contacting an outer wall of the support tube 400, and a separating layer 302 covered on the filling layer 301. The separating layer 301 is made of material different from the terminal body 110.

In the above method of forming the cable terminal, since the composite void filling mastic 300 comprises the separating layer 302 made of material different from the terminal body 110, it avoids the filling layer 301 to directly contact the terminal body 110 made of silicone rubber material, effectively preventing the physical properties of the terminal body 110 from being reduced due to the swelling of the terminal body 110 caused by the filling layer 301, and eliminating the risk of the cracking of the terminal body 110.

In an embodiment, in a case that cable terminal comprises a metal connection terminal 500, the above method may further comprise a step of S310 between the step S300 and the step S400.

S310: providing the metal connection terminal 500, wherein one end of the metal connection terminal 500 is inserted into the support tube 400 from one end of the support tube 400 opposite to the cable joint 200 and electrically connected to the exposed conductor core 210 of the cable joint 200. The metal connection terminal 500 may be electrically connected to the conductor core 210 of the cable joint 200 by crimping or bolting.

In an embodiment, the step S100 may further comprise a step of: providing a sealant 303 on an outer wall of the other end of the support tube 400, wherein the sealant 303 is located between an outer surface of the metal connection terminal 500 and the terminal body 110 at a location where the metal connection terminal 500 is connected to the conductor core 210 after the support tube 400 is detached. Also, during expanding the cold shrinkable terminal 100 onto the support tube 400 provided with the sealant 303, the other end of the support tube 400 on which the sealant 303 is provided should be placed at the one end of the cold shrinkable terminal 100 opposite to the cable joint 200. The sealant 303 may effectively prevent rain or moisture from entering into the clod shrinkable terminal 100 through an interface between the terminal body 110 and the metal connection terminal 500.

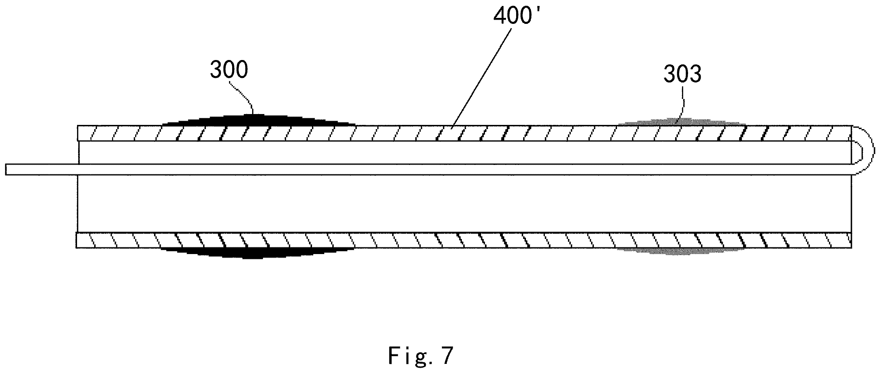

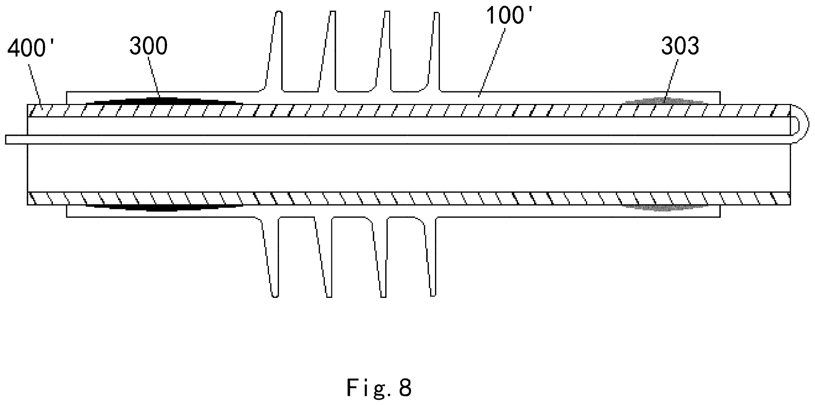

The above described support tube 400 has portions with variable outer diameters, but the present invention is not limited to this. Figs.7-9 shows a support tube according to a second embodiment. Fig.7 is an illustrative axial cross section view of a support tube 400' on which a composite void filling mastic 300 is preset according to a second embodiment of the present invention; Fig.8 is an illustrative axial cross section view of a cold shrinkable terminal assembly according to a second embodiment of the present invention, in which the cold shrinkable terminal is pre-expanded on the support tube 400' provided with the composite void filling mastic 300 of Fig.7; and Fig.9 is an illustrative axial cross section view of the cold shrinkable terminal mounted on the cable joint according to the second embodiment of the present invention.

As shown in Fig.7, the support tube 400' has a cylindrical structure with a constant outer diameter. The composite void filling mastic 300 and the sealant 303 are pre-provided on a predetermined location on the outer wall of the support tube 400'. The composite void filling mastic 300 comprises the filling layer and the separating layer as described in the first embodiment of the present invention. As shown in Figs. 8 and 9, the cold shrinkable terminal 100' does not comprise the stress control cone of the cold shrinkable terminal 100 described in the first embodiment. The other features of the support tube 400' and the cold shrinkable terminal 100' described in the second embodiment are substantially same as the first embodiment, and descriptions about them are omitted herein.

As shown in Fig.9, the cable comprises a conductor core 201', an inner insulation layer 202' covered on the conductor core 201', a conductive shielding layer 203' covered on the inner insulation layer 202', a metal shielding layer 205' covered on the conductive shielding layer 203', and an outer sheath layer 204' covered on the metal shielding layer 205'. Thereby, before terminating the cable, it needs to remove a section of outer sheath layer 204' from an end of the cable to expose a section of metal shielding layer 205', remove a part of the exposed metal shielding layer 205' to expose a section of conductive shielding layer 203', remove a part of the exposed conductive shielding layer 203' to expose a section of inner insulation layer 202', and remove a part of the exposed inner insulation layer 202' to expose a section of conductor core 201'. In this way, a processed cable joint 200' is formed.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A system comprising: a cable, a cold shrinkable cable terminal mounted on the cable to be terminated, the cable having a cable joint (200) at one end thereof, the cable joint (200) comprising a conductor core (210), an inner insulation layer (220) covered on the conductor core (210), and a conductive shielding layer (230) covered on the inner insulation layer (220), and the cold shrinkable cable terminal comprising:
a terminal body (110) fixed to the cable joint (200);
**characterized in that** the system further comprises a composite void filling mastic (300) at least covering an incision (2301) of the exposed conductive shielding layer (230),
the composite void filling mastic (300) comprises
a filling layer (301) being in contact with the cable joint (200), wherein the filling layer (301) is made of material comprising silicone rubber, and the filling layer (301) has a dielectric constant within a range of 10-50; and
a separating layer (302) located between the filling layer (301) and the terminal body (110) and made of material different from the terminal body (110), wherein the separating layer (302) is made of rubber material based hydrocarbon or of at least one of ethylene propylene diene monomer, thermoplastic ethylene propylene rubber, polyisobutylene, and polyisoprene.

2. A cold shrinkable terminal assembly adapted to terminate a cable, the cable having a cable joint (200) at one end thereof, and the cable joint (200) comprising a conductor core (210), an inner insulation layer (220) covered on the conductor core (210), and a conductive shielding layer (230) covered on the inner insulation layer (220), and the cold shrinkable terminal assembly comprising:
a cold shrinkable cable terminal (100) comprising a terminal body (110) configured to be fixed to the cable joint (200); and
a support tube (400), the terminal body (110) being pre-expanded on the support tube (400), **characterized in that** a composite void filling mastic (300) is preset on the support tube (400),
wherein the composite void filling mastic (300) at least is configured to cover an incision (2301) of the exposed conductive shielding layer (230) after the cold shrinkable terminal (100) is fixed to the cable joint (200),
wherein the composite void filling mastic (300) comprises:
a filling layer (301) being in contact with an outer wall of the support tube (400), wherein the filling layer (301) is made of material comprising silicone rubber, and the filling layer (301) has a dielectric constant within a range of 10-50; and
a separating layer (302) located between the filling layer (301) and the terminal body (110) and made of material different from the terminal body (110), wherein the separating layer (302) is made of rubber material based hydrocarbon or of at least one of ethylene propylene diene monomer, thermoplastic ethylene propylene rubber, polyisobutylene, and polyisoprene.

3. The system according to claim 1 or the assembly according to claim 2, wherein the filling layer (301) is made of the same material as the terminal body (110).

4. The system according to claim 1 or the assembly according to claim 2, wherein the filling layer (301) has a thickness within a range of 0.01-1mm, and the separating layer (302) has a thickness within a range of 0.01-0.5mm.

5. The system according to claim 1 or the assembly according to claim 2, wherein the cold shrinkable terminal (100) further comprises a stress control cone (120) provided in the terminal body (110), the stress control cone (120) and the terminal body (110) being formed into a single piece.

6. The system according to claim 1 or the assembly according to claim 5, wherein the filling layer (301) is made of material comprising silicon rubber, and the filling layer (301) has a dielectric constant within a range of 3-50, preferably within a range of 3.5-16.

7. The cold shrinkable terminal assembly according to claim 2, wherein the support tube (400) comprises a straight tube or an irregular shaped tube.

8. The cold shrinkable terminal assembly according to claim 2, wherein a sealant (303) is provided on an outer surface of the support tube (400) corresponding to an end of the conductor core (210).

9. A method of terminating a cable, comprising steps of:
S100: providing a support tube (400), and providing a composite void filling mastic (300) on a section of an outer wall of the support tube (400);
S200: pre-expanding a terminal body (110) of a cold shrinkable terminal (100) on the support tube (400) on which the composite void filling mastic (300) is preset;
S300: inserting a cable joint (200), from which a section of conductive shielding layer (230) and a section of inner insulation layer (220) are removed, of the cable into the support tube (400); and
S400: detaching the support tube (400), so that the terminal body (110) of the cold shrinkable terminal (100) is shrunk on the cable joint (200) of the cable, and the composite void filling mastic (300) at least covers an incision (2301) of the exposed conductive shielding layer (230),
wherein the composite void filling mastic (300) comprises:
a filling layer (301) being in contact with an outer wall of the support tube (400), wherein the filling layer (301) is made of material comprising silicone rubber, and the filling layer (301) has a dielectric constant within a range of 10-50; and
a separating layer (302) covered on the filling layer (301) and made of material different from the terminal body (110), wherein the separating layer (302) is made of rubber material based hydrocarbon or of at least one of ethylene propylene diene monomer, thermoplastic ethylene propylene rubber, polyisobutylene, and polyisoprene.

10. The method according to claim 9, wherein the filling layer (301) is made of the same material as the terminal body (110).

11. The method according to claim 9, further comprising a step of S310 between the step S300 and the step S400,
S310: providing a metal connection terminal (500), wherein one end of the metal connection terminal (500) is inserted into the support tube (400) from one end of the support tube (400) opposite to the cable joint (200) and electrically connected to the exposed conductor core (210) of the cable joint (200).

## Patentansprüche

1. System mit:
einem Kabel, einem kaltschrumpfbaren Kabelanschluss, der an dem abzuschließenden Kabel befestigt ist, wobei das Kabel an einem Ende eine Kabelverbindungsstelle (200) aufweist, wobei die Kabelverbindungsstelle (200) einen Leiterkern (210), eine innere Isolationsschicht (220), die auf den Leiterkern (210) aufgebracht ist, und eine leitfähige Abschirmschicht (230) aufweist, die auf der inneren Isolationsschicht (220) aufgebracht ist, und wobei der kaltschrumpfbare Kabelanschluss aufweist:
einen Anschlusskörper (110), der an der Kabelverbindungsstelle (200) befestigt ist;
**dadurch gekennzeichnet, dass**
das System ferner aufweist
einen hohlraumfüllenden Verbundkitt (300), der zumindest einen Einschnitt (2301) der freigelegten leitfähigen Abschirmschicht (230) abdeckt, wobei der hohlraumfüllende Verbundkitt (300) aufweist:
eine Füllschicht (301), die mit der Kabelverbindungsstelle (200) in Kontakt ist, wobei die Füllschicht (301) aus einem Material hergestellt ist, das Silikongummi enthält, und wobei die Füllschicht (301) eine Dielektrizitätskonstante im Bereich von 10-50 hat; und
eine Trennschicht (302), die zwischen der Füllschicht (301) und dem Anschlusskörper (110) angeordnet ist und aus einem anderen Material als der Anschlusskörper (110) hergestellt ist, wobei die Trennschicht (302) aus Gummimaterial auf Basis von Kohlenwasserstoff oder auf Basis von Ethylenpropylendienmonomer und/oder thermoplastischem Ethylenpropylengummi und/oder Polyisobutylen und/oder Polyisopren hergestellt ist.

2. Kaltschrumpfbare Anschlussanordnung, die ausgebildet ist, ein Kabel abzuschließen, wobei das Kabel an seinem einen Ende eine Kabelverbindungsstelle (200) aufweist, und wobei die Kabelverbindungsstelle (200) einen Leiterkern (210), eine innere Isolationsschicht (220), die auf dem Leiterkern (210) aufgebracht ist, und eine leitfähige Abschirmschicht (230), die auf der inneren Isolationsschicht (220) aufgebracht ist, aufweist, und wobei die kaltschrumpfbare Anschlussanordnung aufweist:
einen kaltschrumpfbaren Kabelanschluss (100) mit einem Anschlusskörper (110), der dazu ausgebildet ist, an der Kabelverbindungsstelle (200) befestigt zu werden; und
ein Stützrohr (400), wobei der Anschlusskörper (110) auf dem Stützrohr (400) vor-expandiert ist,
**dadurch gekennzeichnet, dass**
ein hohlraumfüllender Verbundkitt (300) in dem Stützrohr (400) im Voraus bereitgestellt ist,
wobei der hohlraumfüllende Verbundkitt (300) zumindest dazu ausgebildet ist, einen Einschnitt (2301) der freigelegten leitfähigen Abschirmschicht (230) abzudecken, nachdem der kaltschrumpfbare Anschluss (100) an der Kabelverbindungsstelle (200) befestigt ist,
wobei der hohlraumfüllende Verbundkitt (300) aufweist:
eine Füllschicht (301), die mit einer Außenwand des Stützrohrs (400) in Kontakt ist, wobei die Füllschicht (301) aus einem Material hergestellt ist, das Silikongummi enthält, und die Füllschicht (301) eine Dielektrizitätskonstante im Bereich von 10-50 hat; und
eine Trennschicht (302), die zwischen der Füllschicht (301) und dem Anschlusskörper (110) angeordnet und aus einem anderen Material als der Anschlusskörper (110) hergestellt ist, wobei die Trennschicht (302) aus Gummimaterial auf Basis von Kohlenwasserstoff oder auf Basis von Ethylenpropylendienmonomer und/oder thermoplastischem Ethylenpropylengummi und/oder Polyisobutylen und/oder Polyisopren hergestellt ist.

3. System nach Anspruch 1 oder die Anordnung nach Anspruch 2, wobei die Füllschicht (301) aus dem gleichen Material wie der Anschlusskörper (110) hergestellt ist.

4. System nach Anspruch 1 oder Anordnung nach Anspruch 2, wobei die Füllschicht (301) eine Dicke im Bereich von 0,01-1 mm und die Trennschicht (302) eine Dicke im Bereich von 0,01-0,5 mm hat.

5. System nach Anspruch 1 oder Anordnung nach Anspruch 2, wobei der kaltschrumpfbare Anschluss (100) ferner einen Belastungssteuerungskonus (120) aufweist, der in dem Anschlusskörper (110) vorgesehen ist, wobei der Belastungssteuerungskonus (120) und der Anschlusskörper (110) zu einem einzigen Materialstück geformt sind.

6. System nach Anspruch 1 oder Anordnung nach Anspruch 2, wobei die Füllschicht (301) aus einem Material hergestellt ist, das Silikongummi enthält, und die Füllschicht (301) eine Dielektrizitätskonstante im Bereich von 3-50, vorzugsweise in einem Bereich von 3,5-16, hat.

7. Kaltschrumpfbare Anschlussanordnung nach Anspruch 2, wobei das Stützrohr (400) ein gerades Rohr oder ein unregelmäßig geformtes Rohr umfasst.

8. Kaltschrumpfbare Anschlussanordnung nach Anspruch 2, wobei ein Dichtmittel (303) auf einer Außenfläche des Stützrohrs (400), die einem Ende des Leiterkerns (210) zugeordnet ist, vorgesehen ist.

9. Verfahren zum Abschließen eines Kabels, mit den Schritten:
S100: Bereitstellen eines Stützrohrs (400) und Bereitstellen eines hohlraumfüllenden Verbundkitts (300) auf einem Abschnitt einer Außenwand des Stützrohrs (400);
S200: Vorexpandieren eines Anschlusskörpers (110) eines kaltschrumpfbaren Anschlusses (100) auf dem Stützrohr (400), auf welchem der hohlraumfüllende Verbundkitt (300) im Voraus vorgesehen wird;
S300: Einführen einer Kabelverbindungsstelle (200) des Kabels in das Stützrohr (400), wobei von der Kabelverbindungsstelle ein Abschnitt einer leitfähigen Abschirmschicht (230) und ein Abschnitt einer inneren Isolationsschicht (220) entfernt werden; und
S400: Abkoppeln des Stützrohrs (400) derart, dass der Anschlusskörper (110) des kaltschrumpfbaren Anschlusses (100) auf die Kabelverbindungsstelle (200) des Kabels geschrumpft wird, und der hohlraumfüllende Verbundkitt (300) zumindest einen Einschnitt (2301) der freigelegten leitfähigen Abschirmschicht (230) bedeckt,
wobei der hohlraumfüllende Verbundkitt (300) aufweist:
eine Füllschicht (301), die mit einer Außenwand des Stützrohrs (400) in Kontakt ist, wobei die Füllschicht (301) aus einem Material hergestellt ist, das Silikongummi enthält, und die Füllschicht (301) eine Dielektrizitätskonstante im Bereich 10-50 hat; und
eine Trennschicht (302), die auf die Füllschicht (301) aufgebracht und aus einem anderen Material als der Anschlusskörper (110) hergestellt ist, wobei die Trennschicht (302) aus Gummimaterial auf Basis von Kohlenwasserstoff oder auf Grundlage von Ethylenpropylendienmonomer und/oder thermoplastischem Ethylenpropylengummi und/oder Polyisobutylen und/oder Polyisopren hergestellt ist.

10. Verfahren nach Anspruch 9, wobei die Füllschicht (301) aus dem gleichen Material wie der Anschlusskörper (110) hergestellt ist.

11. Verfahren nach Anspruch 9, das ferner den Schritt S310 zwischen dem Schritt S300 und dem Schritt S400 enthält,
S310: Bereitstellen eines Metallverbindungsanschlusses (500), wobei ein Ende des Metallverbindungsanschlusses (500) von einem Ende des Stützrohrs (400) gegenüberliegend zu der Kabelverbindungsstelle (200) in das Stützrohr (400) eingeführt und mit dem freigelegten Leiterkern (210) der Kabelverbindungsstelle (200) elektrisch verbunden wird.

## Revendications

1. Système comprenant : un câble, une borne de câble rétractable à froid montée sur le câble à terminer, le câble présentant une jointure de câble (200) à une extrémité de celui-ci, la jointure de câble (200) comprenant un noyau conducteur (210), une couche isolante interne (220) couvrant le noyau conducteur (210) et une couche de blindage conductrice (230) couvrant la couche isolante interne (220), et la borne de câble rétractable à froid comprenant :
un corps de borne (110) fixé à la jointure de câble (200) ;
**caractérisé en ce que** le système comprend en outre un mastic composite de remplissage de vide (300) couvrant au moins une incision (2301) de la couche de blindage conductrice (230) exposée,
le mastic composite de remplissage de vide (300) comprend
une couche de remplissage (301) en contact avec la jointure de câble (200), dans lequel la couche de remplissage (301) est constituée d'un matériau comprenant un caoutchouc silicone, et la couche de remplissage (301) présente une constante diélectrique inscrite dans une plage de 10-50 ; et
une couche séparatrice (302) placée entre la couche de remplissage (301) et le corps de borne (110) et constituée d'un matériau différent du corps de borne (110), dans lequel la couche séparatrice (302) est constituée d'un hydrocarbure à base de matériau caoutchouc ou d'au moins un de monomère d'éthylène-propylène-diène (EPDM), de caoutchouc éthylène-propylène thermoplastique, de polyisobutylène et de polyisoprène.

2. Assemblage de borne rétractable à froid adapté pour terminer un câble, le câble présentant une jointure de câble (200) à une extrémité de celui-ci, la jointure de câble (200) comprenant un noyau conducteur (210), une couche isolante interne (220) couvrant le noyau conducteur (210) et une couche de blindage conductrice (230) couvrant la couche d'isolation interne (220), et l'assemblage de borne rétractable à froid comprenant :
une borne de câble rétractable à froid (100) comprenant un corps de borne (110) configuré pour être fixé à la jointure de câble (200) ; et
un tube de support (400), le corps de borne (110) étant pré-étendu sur le tube de support (400), **caractérisé en ce qu'**un mastic composite de remplissage de vide (300) est préinstallé sur le tube de support (400),
dans lequel le mastic composite de remplissage de vide (300) est au moins configuré pour couvrir une incision
(2301) de la couche de blindage conductrice (230) exposée après que la borne rétractable à froid (100) est fixée à la jointure de câble (200),
dans lequel le mastic composite de remplissage de vide (300) comprend :
une couche de remplissage (301) en contact avec une paroi extérieure du tube de support (400), dans lequel la couche de remplissage (301) est constituée d'un matériau comprenant un caoutchouc silicone, et la couche de remplissage (301) présente une constante diélectrique inscrite dans une plage de 10-50 ; et
une couche séparatrice (302) placée entre la couche de remplissage (301) et le corps de borne (110) et constituée d'un matériau différent du corps de borne (110), dans lequel la couche séparatrice (302) est constituée d'un hydrocarbure à base de matériau caoutchouc ou d'au moins un de monomère d'éthylène-propylène-diène (EPDM), de caoutchouc éthylène-propylène thermoplastique, de polyisobutylène et de polyisoprène.

3. Le système selon la revendication 1 ou l'assemblage selon la revendication 2, dans lequel la couche de remplissage (301) est constituée du même matériau que le corps de borne (110).

4. Le système selon la revendication 1 ou l'assemblage selon la revendication 2, dans lequel la couche de remplissage (301) présente une épaisseur s'inscrivant dans une plage de 0,01-1 mm, et la couche séparatrice (302) présente une épaisseur s'inscrivant dans une plage de 0,01-0,5 mm.

5. Le système selon la revendication 1 ou l'assemblage selon la revendication 2, dans lequel la borne rétractable à froid (100) comprend en outre un cône de contrôle de contrainte (120) disposé dans le corps de borne (110), le cône de contrôle de contrainte (120) et le corps de borne (110) étant constitués dans une même pièce.

6. Le système selon la revendication 1 ou l'assemblage selon la revendication 5, dans lequel la couche de remplissage (301) est constituée d'un matériau comprenant un caoutchouc silicone, et la couche de remplissage (301) présente une constante diélectrique inscrite dans une plage de 3-50, de préférence inscrite dans une plage de 3,5-16.

7. L'assemblage de borne rétractable à froid selon la revendication 2, dans lequel le tube de support (400) comprend un tube droit ou un tube de forme irrégulière.

8. L'assemblage de borne rétractable à froid selon la revendication 2, dans lequel un produit d'étanchéité (303) est disposé sur une surface externe du tube de support (400) correspondant à une extrémité du noyau conducteur (210).

9. Procédé de terminaison d'un câble, comprenant des étapes de :
S100 : fourniture d'un tube de support (400), et fourniture d'un mastic composite de remplissage de vide (300) sur une section d'une paroi externe du tube de support (400) ;
S200 : pré-extension d'un corps de borne (110) d'une borne rétractable à froid (100) sur le tube de support (400) sur lequel le mastic composite de remplissage de vide (300) est préinstallé ;
S300 : insertion d'une jointure de câble (200), de laquelle une section de couche de blindage conductrice (230) et une section de couche isolante interne (220) sont retirées, du câble dans le tube de support (400) ; et
S400 : détachement du tube de support (400), de sorte que le corps de borne (110) de la borne rétractable à froid (100) soit rétracté sur la jointure de câble (200) du câble, et le mastic composite de remplissage de vide (300) couvre au moins une incision (2301) de la couche de blindage conductrice (230) exposée,
dans lequel le mastic composite de remplissage de vide (300) comprend :
une couche de remplissage (301) en contact avec une paroi externe du tube de support (400), dans lequel la couche de remplissage (301) est constituée d'un matériau comprenant un caoutchouc silicone, et la couche de remplissage (301) présente une constante diélectrique inscrite dans une plage de 10-50 ; et
une couche séparatrice (302) couvrant la couche de remplissage (301) et constituée d'un matériau différent du corps de borne (110), dans lequel la couche séparatrice (302) est constituée d'un hydrocarbure à base de matériau caoutchouc ou d'au moins un de monomère d'éthylène-propylène-diène (EPDM), de caoutchouc éthylène-propylène thermoplastique, de polyisobutylène et de polyisoprène.

10. Le procédé selon la revendication 9, dans lequel la couche de remplissage (301) est constituée du même matériau que le corps de borne (110).

11. Le procédé selon la revendication 9, comprenant en outre une étape de S310 entre l'étape S300 et l'étape S400,
S310 : fourniture d'une borne de connexion métallique (500), dans lequel une extrémité de la borne de connexion métallique (500) est insérée dans le tube de support (400) depuis une extrémité du tube de support (400) opposée à la jointure de câble (200) et électriquement connectée au noyau conducteur (210) exposé de la jointure de câble (200).
